(19) Europäisches Patentamt
European Patent Office
Office européen des brevets

(11) **EP 1 182 465 B1**

(12) **EUROPEAN PATENT SPECIFICATION**

(45) Date of publication and mention
of the grant of the patent:
**04.10.2006 Bulletin 2006/40**

(51) Int Cl.:
*G01S 3/786* (2006.01)        *G06T 3/00* (2006.01)
*G06T 7/20* (2006.01)        *H04N 5/14* (2006.01)

(21) Application number: **01306762.4**

(22) Date of filing: **08.08.2001**

(54) **Moving object tracking apparatus**

Gerät zum Verfolgen eines sich bewegenden Objekts

Dispositif de poursuite d'un objet mobile

(84) Designated Contracting States:
**DE FR GB**

(30) Priority: **17.08.2000 JP 2000247885**

(43) Date of publication of application:
**27.02.2002 Bulletin 2002/09**

(73) Proprietor: **SHARP KABUSHIKI KAISHA**
**Osaka 545-8522 (JP)**

(72) Inventors:
• **Fukuhara, Yoshio**
**Niiza-shi,**
**Saitama (JP)**
• **Kumata, Kiyoshi**
**Kyotonabe-shi,**
**Kyoto (JP)**
• **Tanaka, Shinichi**
**Nara-shi,**
**Nara (JP)**

(74) Representative: **Brown, Kenneth Richard et al**
**R.G.C. Jenkins & Co.**
**26 Caxton Street**
**London SW1H 0RJ (GB)**

(56) References cited:
**WO-A-99/45511**

• SMITH S M: "ASSET-2: real-time motion segmentation and shape tracking" COMPUTER VISION, 1995. PROCEEDINGS., FIFTH INTERNATIONAL CONFERENCE ON CAMBRIDGE, MA, USA 20-23 JUNE 1995, LOS ALAMITOS, CA, USA,IEEE COMPUT. SOC, US, 20 June 1995 (1995-06-20), pages 237-244, XP010147011 ISBN: 0-8186-7042-8

• BOGNER S L: "An introduction to panospheric imaging" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, 22 October 1995 (1995-10-22), pages 3099-3106, XP010194746 ISBN: 0-7803-2559-1

• ONOE Y ET AL: "Visual surveillance and monitoring system using an omnidirectional video camera" PATTERN RECOGNITION, 1998. PROCEEDINGS. FOURTEENTH INTERNATIONAL CONFERENCE ON BRISBANE, QLD., AUSTRALIA 16-20 AUG. 1998, LOS ALAMITOS, CA, USA,IEEE COMPUT. SOC, US, 16 August 1998 (1998-08-16), pages 588-592, XP010297598 ISBN: 0-8186-8512-3

• YAMAZAWA K ET AL: "OBSTACLE DETECTION WITH OMNIDIRECTIONAL IMAGE SENSOR HYPEROMNI VISION" PROCEEDINGS OF THE INTERNATIONAL CONFERENCE ON ROBOTICS AND AUTOMATION. NAGOYA,JAPAN, MAY 21 - 27, 1995, NEW YORK, IEEE, US, vol. 1, 21 May 1995 (1995-05-21), pages 1062-1067, XP000657301 ISBN: 0-7803-1966-4

• YAMAZAWA K ET AL: "HYPEROMNI VISION: VISUAL NAVIGATION WITH AN OMNIDIRECTIONAL IMAGE SENSOR" SYSTEMS & COMPUTERS IN JAPAN, SCRIPTA TECHNICA JOURNALS. NEW YORK, US, vol. 28, no. 4, 1 April 1997 (1997-04-01), pages 36-47, XP000699982 ISSN: 0882-1666

**Description**

BACKGROUND OF THE INVENTION

1. FIELD OF THE INVENTION:

The present invention relates to a moving object tracking apparatus for automatically tracking a moving object in the environment, in which visual field information on an environment is captured using a video camera or the like and the captured image information is processed using an image processing technique to detect the moving object.

2. DESCRIPTION OF THE RELATED ART:

Recently, in the field of surveillance cameras for surveillance of intruders in a dangerous area or prevention of collision of a mobile device, attention has been focused on a moving object tracking apparatus for automatically tracking a moving object in an environment, in which visual field information on the environment is captured using a video camera or the like and the captured image information is processed using an image processing technique to detect the moving object. Conventionally, a camera itself follows a moving object.
For example:

(1) Japanese Laid-Open Publication No. 8-9227 discloses an image capturing apparatus having an automatic tracking function in which a single camera capable of changing a viewing angle (e.g., pan, tilt and zoom capabilities) is rotated depending on the motion of a moving object so as to track the moving object.

(2) Japanese Laid-Open Publication No. 7-114642 discloses a moving object measuring apparatus in which, in order to smooth the tracking of the camera described in (1) above, the position of a moving object is predicted, and a target value which is calculated based on the predicted position is provided to means for driving the camera.

(3) Japanese Laid-Open Publication No. 9-322052 discloses a tracking apparatus using a plurality of cameras (an automatic photographing camera system) in which two cameras called "sensor cameras" are used to determine the coordinates of a moving object according to the principle of trigonometrical survey. The cameras are controlled (e.g., panned, tilted or zoomed) in accordance with the coordinates so as to track the moving object.

(4) WO 99/45511 discloses a combined wide angle and narrow angle imaging system for surveillance and monitoring. Image information from the wide angle system is analysed to detect objects in a wide field of view and to generate viewing parameters which are used to control pan, tilt and zoom of one or more cameras to obtain high resolution magnified images of the objects.

However, the above-described apparatus (1) does not function unless a moving object is present in the viewing angle of the camera, so that when a target moving object moves fast and goes outside the viewing angle of the camera, the apparatus cannot track the moving object. Although the above-described apparatus (2) has a better tracking performance the apparatus (1), a high-performance and high-speed camera controlling device is required. The above-described apparatuses (3) and (4) employ a plurality of cameras so as to capture a wide range of information on the environment and therefore has an enhanced tracking performance. However, the use of a plurality of cameras increases the cost of the system and further a control circuit for controlling the cameras is accordingly complex.
In any case, if a camera is rotated, the tracking speed is limited as described above and an image captured simultaneously is restricted by the viewing angle of the camera so that a blind spot exists. Moreover, since a mechanical driving portion for rotating a camera is required, it is necessary to maintain the mechanical driving portion when operated for a long time.
There has been proposed a method using a rotating mirror for capturing images in all directions simultaneously without a mechanical driving portion. Among other things, a method using a hyperboloidal mirror can convert an input image to an image viewed from the focus of the mirror (a perspective projection image substantially equivalent to an image taken by a typical camera) or an image obtained by rotating a camera around a vertical axis (a cylinder-shaped panoramic image). Therefore, such a method can perform various kinds of image processing compared to methods employing mirrors having other shapes. Such an omnidirectional visual system employing the hyperboloidal mirror is disclosed in Japanese Laid-Open Publication No. 6-295333.

SUMMARY OF THE INVENTION

According to one aspect of the present invention, there is provided a moving object tracking apparatus for detecting and tracking one or more moving objects in an environment, comprising:

an optical system including a hyperboloidal mirror for capturing visual field information on a 360° environment;
a stationary camera for converting the captured visual field information to image information; and
an information processing section for processing the image information so as to detect the one or more moving objects based on the image information;
wherein the apparatus has a single camera, which is said stationary camera, and in that the information processing section is arranged to process the image information from said single, stationary camera, so as to track said one or more moving objects, wherein the information processing section provides a respective marker to the respective one or more moving objects, only if the size of the one or each moving objects is above a predetermined threshold.

According to the above-described features, a visual field information on a 360° environment can be captured by an optical system including a hyperboloidal mirror. The visual field information obtained by the optical system is converted to image information using a single stationary camera (which is not rotated). By processing such image information, a moving object in the environment can be detected and tracked. Therefore, it is possible to realize a tracking apparatus including a single camera without a mechanical portion, in which a blind spot does not occur. In conventional moving object tracking apparatuses, a camera itself needs to be mechanically operated (e.g., pan and tilt), or a plurality of cameras need to be switched. In contrast, according to the present invention, the above-described problems can be solved by use of a hyperboloidal mirror, thereby making it possible to realize a moving object tracking apparatus having low cost and high precision capabilities.

For example, as described later, data of each moving object is labeled so as to be managed and identified when the moving object is detected by image processing. Thereby, one or more moving objects in an image can be tracked.

In one embodiment of this invention, the image information includes all-direction image information. The information processing section converts at least a portion of the all-direction image information to panoramic image information. The information processing section provides a marker to each of the one or more moving objects in the panoramic image information.

According to the above-described feature, an all-direction image of a 360° environment can be easily viewed using a panoramic image. By using a marker, identification of a moving object is made easier.

In one embodiment of this invention, the information processing section provides a marker to each of the one or more moving objects depending on a size of each of the one or more moving objects.

According to the above-described feature, a range of an image in which an attempt is made to detect a moving object can be clearly defined by changing the size of a marker.

In one embodiment of this invention, the image information includes all-direction image information, and the information processing section converts at least a portion of the all-direction image information to perspective projection image information.

According to the above-described feature, captured image information is converted to a perspective projection image which is an image viewed from a focus of a hyperboloidal mirror. Therefore, an image without distortion due to the hyperboloidal mirror can be obtained.

In one embodiment of this invention, the information processing section processes the image information using a previously prepared table.

According to the above-described feature, image conversion can be sped up by using previously prepared table.

In one embodiment of this invention, the information processing section processes the image information using only one kind of data out of RGB data in the image information.

According to the above-described feature, since only one kind of data of RGB data is used in image processing, the amount of the image processing is reduced. Therefore, the image processing can be sped up.

In one embodiment of this invention, the information processing section detects the one or more moving objects based on a brightness difference between predetermined frame information of the image information and frame information previous to the predetermined frame information of the image information.

Thus, the invention described herein makes possible the advantages of providing a moving object tracking apparatus using an optical system employing a hyperboloidal mirror in which 360° visual field information on an environment is captured, where a moving object is detected from the captured image information using an image processing technique so as to be tracked. Therefore, a mechanical driving portion is not required and there is no blind spot present in the moving object tracking apparatus.

According to another aspect of the present invention there is provided a method comprising the steps of: capturing, by means of a hyperboloidal mirror (10; 70), image information from a 360 degree field of view; processing said captured information to detect one or more objects in said field of view, and tracking said one or more objects, wherein both the object detection and tracking is performed, using a single stationary camera capturing said image information from the hyperboloidal mirror, by processing said captured information and each detected moving object is allocated a marker, if said moving object is of a size above a predetermined threshold.

These and other advantages of the present invention will become apparent to those skilled in the art upon reading and understanding the following detailed description with reference to the accompanying figures.

BRIEF DESCRIPTION OF THE DRAWINGS

Figure 1 is a diagram showing a moving object tracking apparatus according to an example of the present invention.

Figure 2 is a diagram showing an all-direction image including visual field information on the 360° environment displayed on a display screen in an example of the present invention.

Figure 3 is a diagram showing an image obtained by subjecting an all-direction image to panorama conversion in an example of the present invention.

Figure **4** is a diagram showing a perspective projection image in an example of the present invention.

Figures **5A** and **5B** are diagrams for explaining a pan operation in a perspective projection image in an example of the present invention.

Figure **6** is a diagram for explaining a positional relationship between a hyperboloidal mirror and a camera in an optical system in an example of the present invention.

Figure **7** is a diagram showing a moving object tracking apparatus according to an example of the present invention.

Figure **8** is a diagram showing an image processing board in an example of the present invention.

Figure **9** is a diagram showing an all-direction image displayed on a display screen of a personal computer in an example of the present invention.

Figure **10** is a diagram showing an all-direction image, a panoramic image, and a perspective projection image displayed on a display screen of a personal computer in an example of the present invention.

Figure **11** is a flowchart for explaining a process flow according to which a moving object is detected in an all-direction image, a marker is given to the moving object, and panorama conversion and perspective projection conversion are performed in an example of the present invention.

Figure **12** is a diagram for explaining a coordinate system of an all-direction image in an example of the present invention.

Figures **13A** and **13B** are diagrams for explaining conversion from an all-direction image to a panoramic image in an example of the present invention.

Figures **14A** and **14B** are diagrams for explaining conversion from an all-direction image to a perspective projection image in an example of the present invention.

Figure **15** is a diagram showing how an object is projected by a hyperboloidal mirror in an example of the present invention.

DESCRIPTION OF THE PREFERRED EMBODIMENTS

Hereinafter, the present invention will be described by way of illustrative examples with reference to the accompanying drawings.

A moving object tracking apparatus according to the present invention employs an optical system using a hyperboloidal mirror for capturing 360° visual field information, in which the visual field information obtained by the optical system is converted into image information by a camera, and a moving object is detected and tracked using an image processing technique.

Typically, the term "image" refers to a still picture, and the term "video" refers to a moving picture. "Video" consists of a plurality of still pictures, so "video" is herein included as a kind of "image". The present invention can capture images in all directions simultaneously in real time. "Image" may be herein included as a kind of "video".

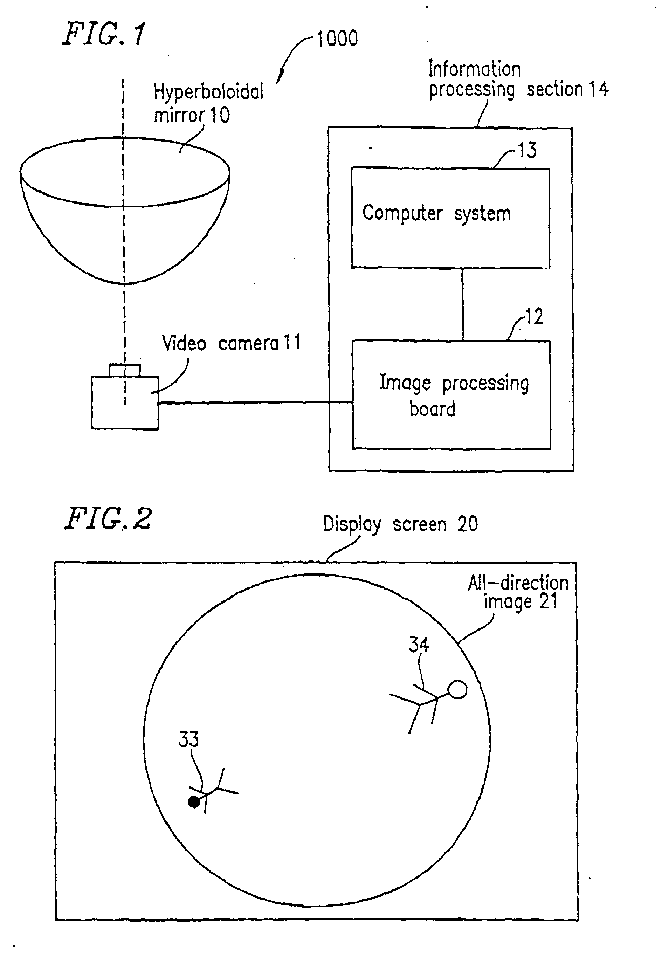

Figure **1** is a block diagram showing a schematic configuration of a moving object tracking apparatus **1000** according to an example of the present invention. The moving object tracking apparatus **1000** includes a hyperboloidal mirror **10,** a video camera **11,** and an information processing section **14.** The information processing section **14** includes an image processing board **12** and a computer system **13.** In the moving object tracking apparatus **1000,** the hyperboloidal mirror **10** capable of obtaining 360° visual field information is used as an optical system, and video of the environment obtained by the optical system is converted to image information by the video camera **11.** The image information is converted to digital information by an image processing board **12,** and the digital information is stored in a memory of a computer system **13.** The digital information is subjected to image processing as described later, thereby detecting and tracking a moving object.

Figure **2** shows a display screen **20** of the computer system **13** which displays the digital information obtained by capturing, using the video camera **11,** an all-direction image **21** of the 360° environment obtained by the hyperboloidal mirror **10** and converting by the image processing board **12.** Thus, video (image) of the 360° environment (i.e., a certain range of image projected on the hyperboloidal mirror **10**) can be captured simultaneously in real time. Moving objects are detected using image processing as described later, and the data of each moving object are labeled so as to be managed and identified. Therefore, one or more moving objects included in an image can be tracked.

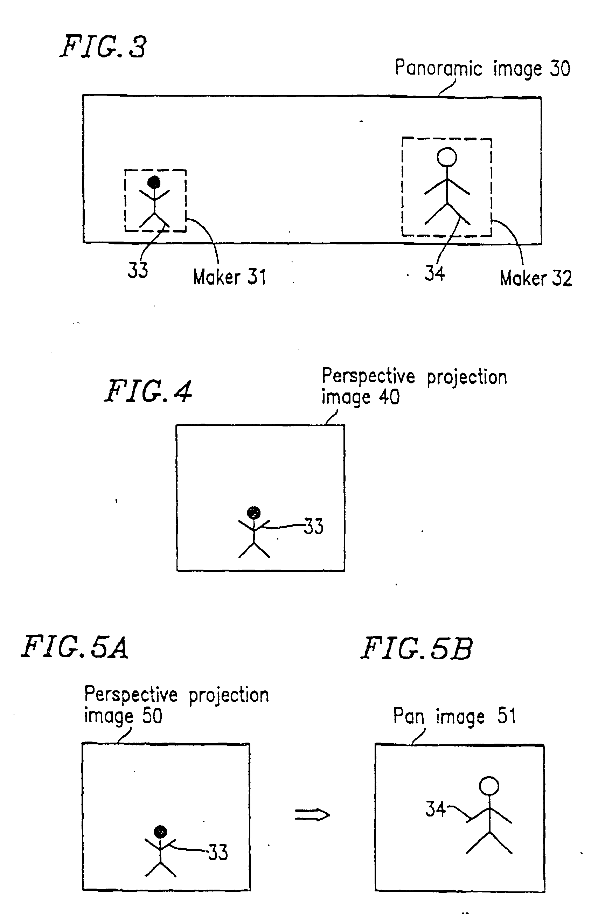

Figure **3** is a panoramic image **30** obtained by subjecting the 360° all-direction image of Figure **2** to image processing described later (panorama conversion) in order to make it easy to view the 360° all-direction image. With the panoramic image **30,** video (i.e., image) of the 360° environment can be seen simultaneously. Moving objects **33** and **34** detected in the panoramic image **30** are subjected to image processing as described later to give the moving objects **33** and **34** respective markers **31** and **32,** thereby making it easy to identify the moving objects **33** and **34.** Further, once the sizes of the markers **31** and **32** are determined depending on the areas of the moving objects **33** and **34** detected in the panoramic image **30,** it is easier to identify the moving objects **33** and **34**.

The panoramic image **30** is an image obtained by developing (spreading out) the all-direction video obtained by the hyperboloidal mirror **10** in a $\theta$ direction, and includes distortion due to the hyperboloidal mirror **10.** Therefore, the panoramic image **30** is subjected to image processing as described later to be converted into a perspective projection image **40** which is an image viewed from a focus of the hyperboloidal mirror **10** as shown in Figure **4** (an image photographed by a typical camera), thereby obtaining an image without distortion. Algorithms for panorama conversion and perspective projection conversion for images obtained by the hyperboloidal mirror **10** are disclosed Japanese Laid-Open Publication No. 6-295333, for example.

The perspective projection image **40** of Figure **4** is an image without distortion converted from the all-direction image **21** of Figure **2,** and is also regarded as an image cut from the panoramic image **30** of Figure **3.** Therefore, by changing portions to be cut off the panoramic image **30** using an image processing technique as described later, operations equivalent to pan and tilt can be performed without moving a camera as shown in Figures **5A** and **5B.** Figure **5A** is a perspective projection image **50** and Figure **5B** is a perspective projection image **51** after a pan operation.

As described above, algorithms for panorama conversion and perspective projection conversion for images obtained by the hyperboloidal mirror **10** are disclosed in Japanese Laid-Open Publication No. 6-295333, for example. However, calculation of conversion formulas described in this publication is excessively time-consuming, so that image processing cannot be performed in real time. Therefore, in the present invention data required for the conversion formulas are previously prepared, by an amount corresponding to the number of pixels of a display (i.e., the resolution of a captured image), in a memory of the computer system **13** or the like as a table. As the conversion is needed, the calculation results of the conversion formulas are read out from the table without calculation, making it possible to speed up the image processing.

Further, when the all-direction video obtained by the hyperboloidal mirror **10** is converted to digital information by the image processing board **12** as described above, three kinds of data (R, G and B) on color video are obtained when a video camera captures color images. The image processing described later may not be performed for all three kinds of data (R, G and B), and, for example, only one kind of data (e.g., R) is used to detect a moving object, thereby reducing the amount of image processing and therefore speeding up the processing. For example, the all-direction image **21** shown in Figure **2** is obtained by processing only R data.

Hereinafter, an example of the present invention will be described in more detail.

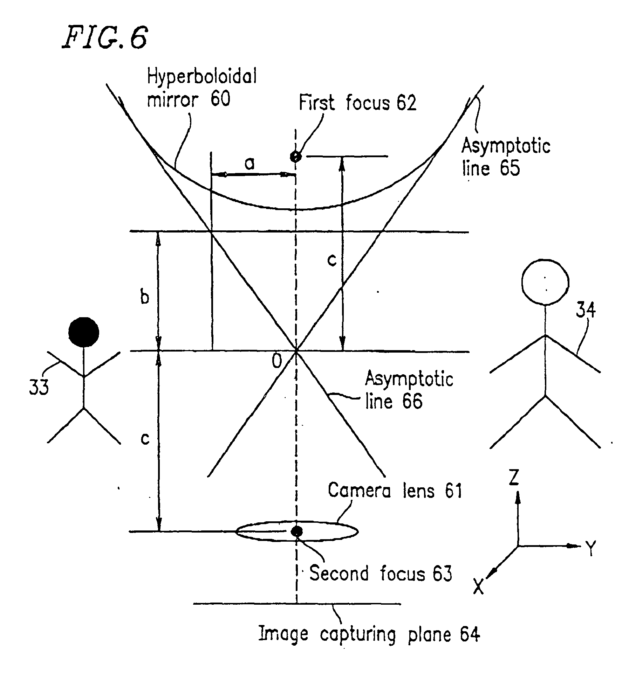

Details of the omnidirectional visual system employing the hyperboloidal mirror **10** used as the optical system of the present invention is disclosed in Japanese Laid-Open Publication No. 6-295333. As shown in Figure **6,** the center of a camera lens **61** of an image capturing section (i.e., the video camera **11**) is positioned at a second focus **63** opposite a first focus **62** of a hyperboloidal mirror **60** (corresponding to the hyperboloidal mirror **10** of Figure **1**), and an image capturing plane **64** of the image capturing section is positioned a focal distance of the camera lens **61** away from the camera lens **61.** Therefore, the 360° visual field information is projected on the image capturing plane **64,** thereby obtaining the all-direction image **21** as shown in Figure **2.**

In Figure **6,** a coordinate system is defined as follows. The intersection **0** of asymptotic lines **65** and **66** is an origin, a horizontal plane is formed by the X axis and the Y axis, and a vertical axis (a direction connecting between the first focus **62** and the second focus **63**) is the Z axis. In such a coordinate system, a hyperboloidal surface is represented by

$$(X^2 + Y^2)/a^2 - Z^2/b^2 = -1 \quad \cdots \quad (1)$$

$$c^2 = (a^2 + b^2) \quad \cdots \quad (2)$$

where a and b are numerical values (distances) determining the shape of the hyperboloidal surface, and c is a numerical value representing a distance from the intersection **0** of the asymptotic lines **65** and **66** to each focus **62** and **63.**

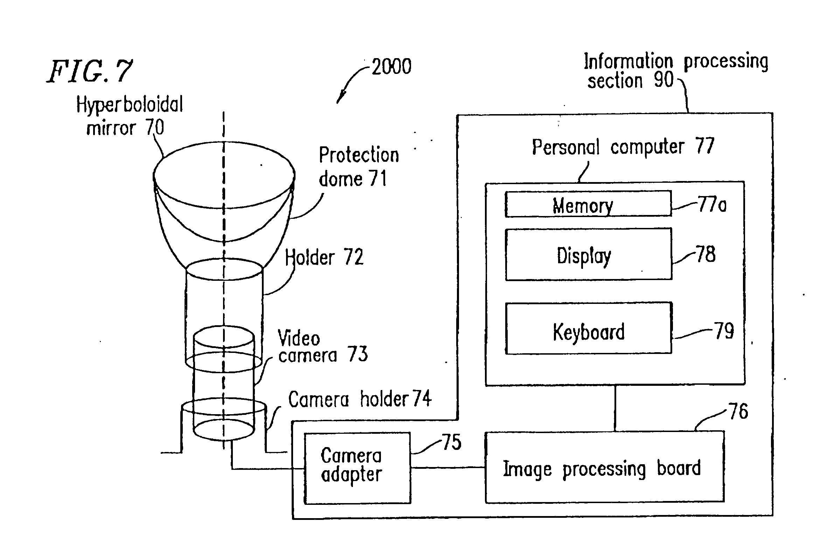

Figure **7** is a diagram showing a schematic configuration of a moving object tracking apparatus **2000** according to an example of the present invention. The moving object tracking apparatus **2000** includes a hyperboloidal mirror **70,** a protection dome **71,** a holder **72,** a video camera **73,** a camera holder **74,** and an information processing section **90.** The information processing section **90** includes a camera adapter **75,** an image processing board **76,** and a personal computer **77.** In this example, an aluminum material is shaped and a resultant surface thereof is subjected to metal deposition, thereby obtaining a hyperboloidal mirror **70** having a diameter of 65 mm (a=17.93, b=21.43 and c=27.94). Further, the protection dome **71** made of acryl is attached to the hyperboloidel mirror **70,** and the video camera **73** is attached via the holder **72** in order to capture information on the environment. The video camera **73** is supported by the camera holder **74** so as to prevent the camera **73** from falling.

In this construction, a viewing angle is obtained where the horizontal viewing angle is 360°, the vertical viewing angle is about 90°, the elevation angle is about 25°, and the depression angle is about 65°. Although in this example metal is shaped to produce the hyperboloidal mirror **70,** a plastic material-may be shaped using a mold, and a resultant surface thereof is subjected to metal deposition in mass production, thereby making it possible to reduce production cost.

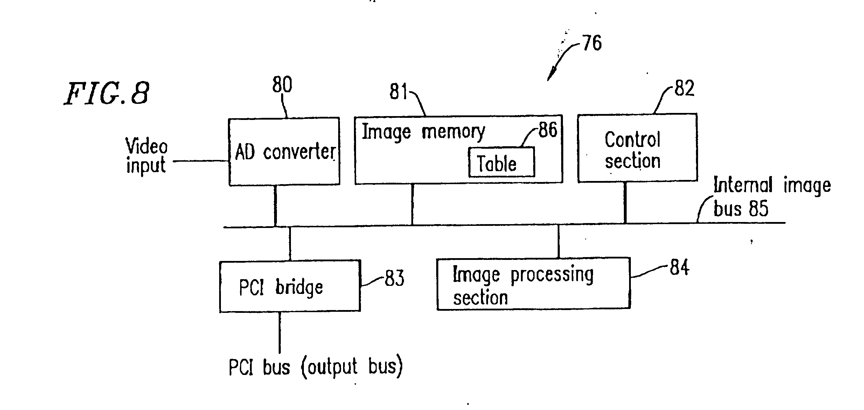

As an image capturing section (the video camera 73), a color CCD camera having f=4 mm and a resolution of 410,000 pixels is used. A video composite signal from the CCD camera is converted to an RGB signal by the camera adapter **75,** and the RGB signal is stored in an image memory **81** (Figure **8**) in the image processing board **76** mounted in an extended slot of the personal computer **77.** GPB-K manufactured by Sharp Semiconductor is used as the image processing board **76.** This board includes a wide-range image processing library, and has an image processing rate of **40** nsec per pixel. Further, the personal computer **77** includes a Celeron 400 MHz as a CPU, a memory of 64 MB, and Windows NT as an OS, for example.

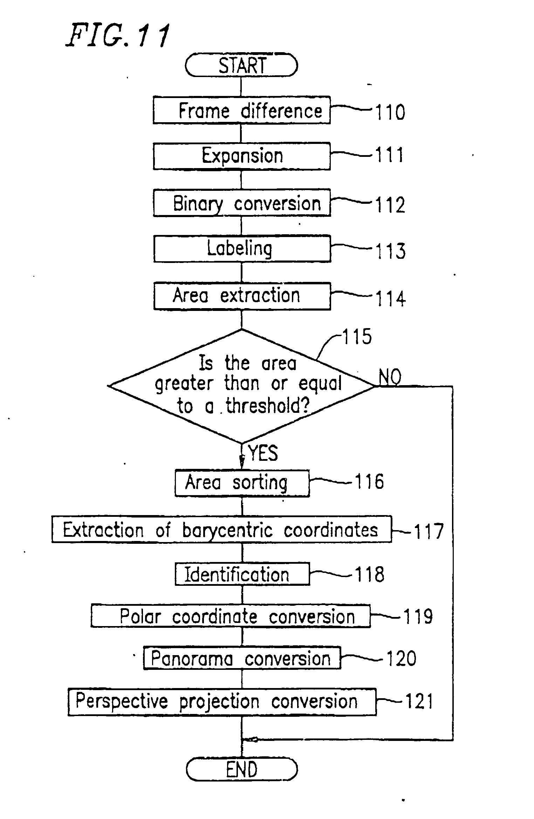

Figure **8** is a diagram showing an internal structure block in the image processing board **76** of Figure **7** and is used for explaining an operation of the internal structure block. All-direction image data converted to an RGB signal by the camera adapter **75** is converted to digital data having 8 bits in each color of R, G and B by an AD converter **80,** and the resultant digital data is stored in an image memory **81.** Data in the image memory **81** is transferred via an internal image bus **85** to an image processing section **84,** and various kinds of image processing (Figure **11**) are performed using the above-described image processing library at high speed. Processed data is transferred via a PCI bridge **83** to a PCI bus of the extended slot of the personal computer **77** and is stored in a memory **77a** of the personal computer **77.** The data is displayed on a display **78.** A keyboard **79** shown in Figure **7** is a means for receiving commands to start and end the processes of the moving object tracking apparatus **2000.** The control section **82** shown in Figure **8** controls transmission and reception of host commands, the image memory **81,** and the image processing section **84.**

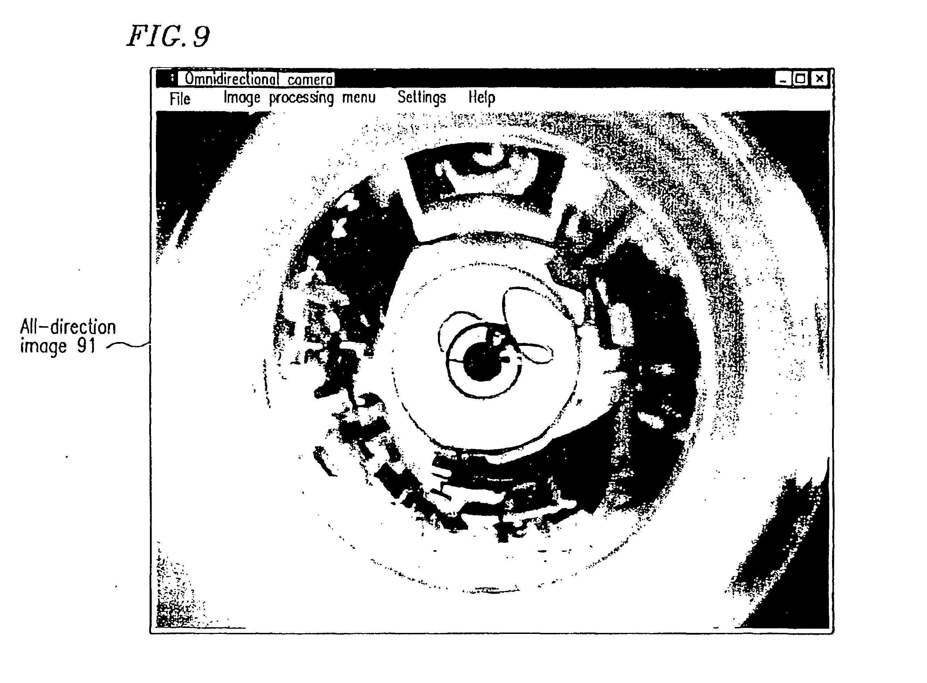

Figure **9** shows a window of the display **78** displaying data stored in the memory **77a** which is obtained by transferring all-direction image data captured in the image memory **81** of the image processing board **76** to the personal computer **77.** The screen size of this window is a VGA screen of 640 x 480 pixels, for example. The window corresponds to the display screen **20** of Figure **2.** When the all-direction image **91** is displayed on a VGA screen having a resolution of 640 x 480 pixels, the resolution of 410,000 pixels of the CCD camera is sufficient. It should be noted that a camera having a higher resolution is required to increase the resolution of an image.

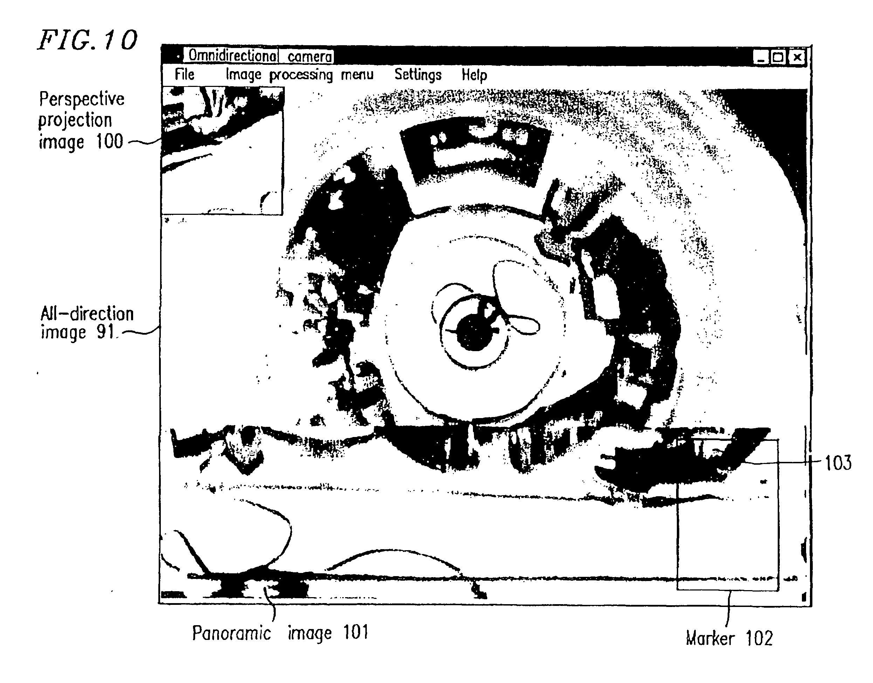

Figure **10** shows the above-described window into which a panoramic image **101** obtained by subjecting the all-direction image **91** of Figure **9** to panorama conversion and a perspective projection image **100** obtained by subjecting the all-direction image **91** to perspective projection conversion are integrated. In this case, the panoramic image **101** has a size of 640 x 160 pixels while the perspective projection image **100** has a size of 120 x 120 pixels. A marker **102** is given to a moving object **103** in the panoramic image **101.**

Hereinafter, a process flow in which the moving object **103** is detected from the all-direction image **91** of Figure **9,** tha marker 102 is given to the moving object **103,** and the panoramic image **101** and the perspective projection image **100** are produced will be described with reference to Figure **11.**

All-direction image data is converted to an RGB signal by the camera adapter **75** of Figure **7,** the RGB signal is converted to digital data having 8 bits in each color of R, G and B by the AD converter **80** of Figure **8,** and the digital data is stored in the image memory **81.** In step **110** of Figure **11,** all-direction image frame data captured in a previous frame and all-direction image frame data captured in a current frame are subject to a subtraction operation so as to calculate a frame difference.

As a postprocess of the frame difference or a preprocess of a subsequent binary conversion, a maximum pixel value in a 3 x 3 pixel window is determined in step **111.** Thereby, the image is expanded. In this case, since a moving object is likely to be split into separate objects in a binary conversion, the expansion of the image is carried out in order to unite the separate objects.

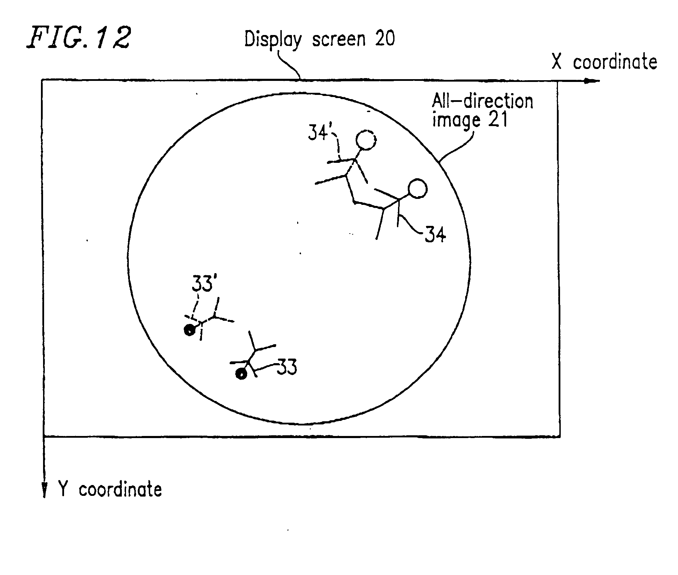

Thereafter, in step **112,** an 256-gray level image is converted to a 2-gray level image having one gray level for a background and the other gray level for a moving object to be tracked. As a result of the frame difference calculation, the background having substantially no movement amount has a brightness difference of zero. The moving object has a brightness difference between a previous frame and a current frame, so that the brightness difference greater than or equal to a predetermined value is detected as a moving object. The moving object can be tracked by detecting such a brightness difference between each frame. Referring to Figure **12,** the positions of the moving objects **33** and **34** in the current frame are different from the respective positions of the moving objects **33'** and **34'** in the previous frame. Therefore, brightness differences are present at the positions of the moving objects **33, 34, 33'** and **34'.** Moving objects can be tracked by detecting such brightness differences between each frame.

Thereafter, in step **113,** connected regions in the binary image data are numbered (labeled). By labeling, the area or the center of mass of a connected region (described later) can be extracted for each label. Further, by labeling, a plurality of moving objects can be distinguished. In this example, as shown in Figure **12,** an X-Y coordinate system where the upper left corner is an origin is used as a coordinate system for the all-direction image **21** in a VGA screen of 640 x 480 pixels (the display screen **20**).

Thereafter, in step **114,** the area (the number of pixels) of each labeled connected region is calculated. In step **115,** whether the area is greater than or equal to a threshold is determined. If the area is less than the threshold, the labeled connected region is determined as noise. Therefore, the process flow of the present invention is resistant to noise.

In step **116,** the extracted areas are sorted in decreasing order of size. In step **117,** the barycentric coordinates are calculated for each of the n largest areas. The barycentric coordinates of each connected region labeled in step **113** are calculated by a first-order moment calculated for the connected region being divided by the area (0-order moment). Thereafter, in step **118,** the n sets of barycentric coordinates in a current frame extracted in step **117** and the n sets of barycentric coordinates in a previous frame are identified, thereby detecting moving objects and tracking each moving object.

In this manner, moving objects can be detected and the barycentric coordinates thereof can be calculated. Therefore, in step **119,** a radius and an angle of each moving object in a polar coordinate system are calculated based on the barycentric coordinates thereof. Thereafter, in step **120,** the all-direction image of a current frame is converted to a panoramic image. In step **121,** the all-direction image of a current frame is converted to a perspective projection image. Further, in step **120,** when the panorama conversion is carried out, a marker is given to a moving object detected in step **119.** Thus, by giving a marker to a moving object, a plurality of moving objects in an all-direction image can be tracked without difficulty.

In the moving object detection flow from step **110** to step **119,** only G data of RGB data may be used so as to speed up the detection processing of moving objects, for example. In step **120** and step **121,** all RGB data are used so as to process a color image.

Thus, moving objects are detected from all-direction image data in a current frame, and the all-direction image data can be converted to panoramic image data and perspective projection image data having markers. The converted image data is stored in the memory **77a** of the personal computer **77,** and transferred to the display **78** on which the image data is presented (Figures **9** and **10**). After the above-described process, a next all-direction image is captured and subsequent frame data is processed, so that a moving image can be displayed.

Hereinafter, methods for converting an all-direction image to a panoramic image and a perspective projection image in steps **120** and **121** will be described. Algorithms for panorama conversion and perspective projection conversion are disclosed Japanese Laid-Open Publication No. 6-295333, for example.

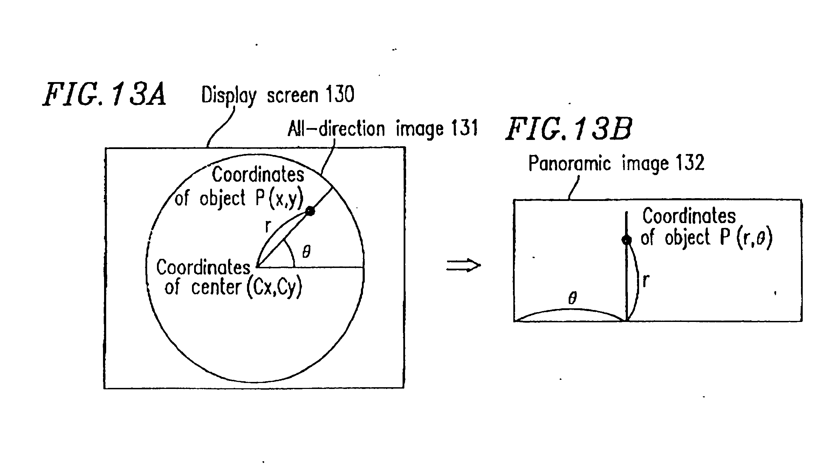

First, panorama conversion will be described with reference to Figures **13A** and **13B.** As disclosed in Japanese Laid-Open Publication No. 6-295333, an object P (pixel) represented by coordinates (x, y) in a display screen **130** shown in Figure **13A** can be projected to a panorama screen **132** shown in Figure **13B** by calculating a radius r and an angle θ of the object **P** in an all-direction image **131** where the coordinates of the center of the all-direction image **131** is (Cx, Cy). However, to perform such a conversion operation for each pixel is time-consuming. Therefore, in this example, the coordinates in the all-direction image **131** calculated based on the coordinate system of the panoramic image **132** corresponding to all pixels in the panoramic image **132** are previously prepared as a table **86** (Figure **8**), and panorama conversion is carried out only by referencing the table **86.** The table **86** is stored in the image memory **81,** for example.

Specifically, a pixel designated as (r, 8) in the panoramic image **132** is represented in the all-direction image **131** by (x, y), i.e.,

$$x = Cx + r \times \cos\theta \cdots (3)$$

$$y = Cy + r \times \sin\theta \cdots (4).$$

In the table 86, for the radius r and the angle $\theta$ of each pixel in the panoramic image **132,** a corresponding x coordinate is calculated in advance in accordance with formula (3) and a corresponding y coordinate is calculated in advance in accordance with formula (4). These x and y coordinates are stored in respective tables tbx and tby. In this case, the angle $\theta$ ranges from 0° to 360° in 1/100° steps and the radius r ranges from 0 pixel to 160 pixels. Therefore, the size of the panoramic image **101** is 160 pixels in a lengthwise direction as shown in Figure **10.**

It should be noted that a pan operation can be performed in the panoramic image **132** by adding an offset to each angle $\theta$ when preparing the table. Therefore, such a pan operation can be performed in the panoramic image **132** at high speed by image processing. As to a marker adding operation, since the radius and the angle of a moving object are determined in step **119** (Figure 11). a marker is displayed (added) at a corresponding portion in a panoramic image based on such information.

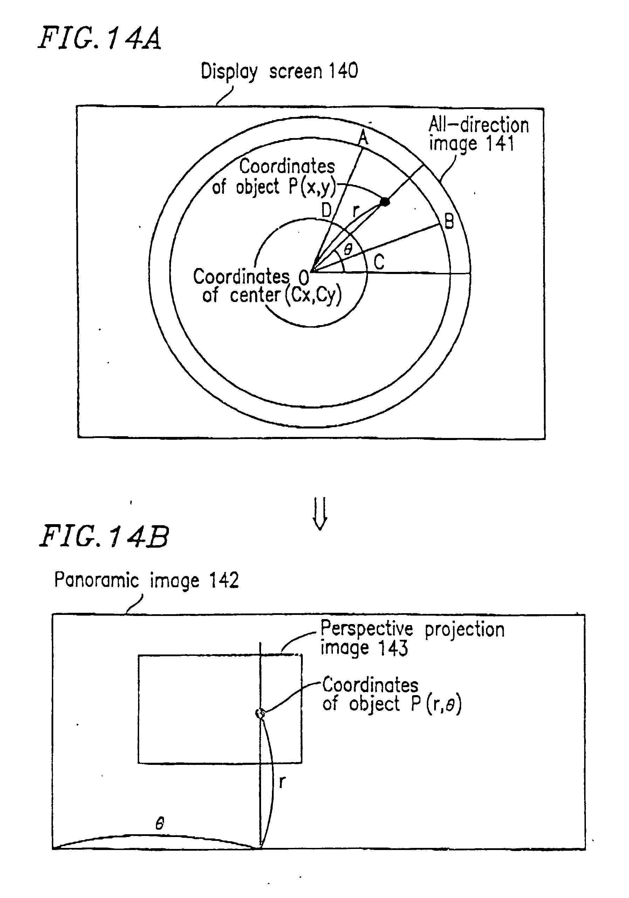

Hereinafter, perspective projection conversion will be described with reference to Figures **14A** and **14B.** For example, a sector portion surrounded by **A, B, C** and **D** in an all-direction image **141** on a display screen **140** shown in Figure **14A** is subjected to perspective projection conversion. A radius r and an angle $\theta$ of an object **P** (pixel) designated as coordinates (x, y) with reference to the coordinate of the center (Cx, Cy) of the all-direction image **141** are determined. Thereby, the sector portion is projected onto a panoramic image **142** as a perspective projection image **143** as shown in Figure **14B.** However, to perform such a conversion operation for each pixel is time-consuming. Therefore, in this example, as described above for the panorama conversion, the coordinates in the all-direction image **141** corresponding to all pixels in the panoramic image **142** are previously prepared as the table **86** (Figure **8**), and perspective projection conversion is carried out only by referencing the table **86.**

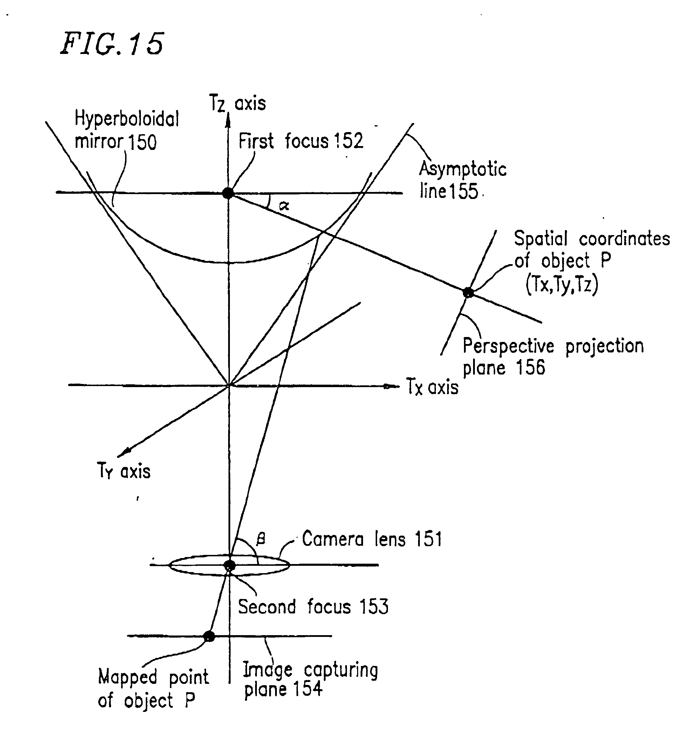

Specifically, as shown in Figure **15,** it is assumed that there is a perspective projection plane **156** containing an object **P** in a three-dimensional space where the coordinates of the object **P** are (Tx, Ty, Tz). It is also assumed that an image of the object **P** is seen in an all-direction image **141** on an image capturing plane **154** of the video camera **73** (Figure 7). In this case, the polar coordinates (r, $\theta$) of the object **P** (pixel) in the all-direction image **141** on the perspective projection plane **156** are obtained using the table **86.** Thereafter, by referencing the above-described x-coordinate table tbx and the y-coordinate table tby, coordinates (x, y) in the all-direction image **141** are obtained, thereby making it possible to perform perspective projection conversion.

Specifically, a pixel represented by coordinates (r, $\theta$) in the perspective projection image **143** (Figure **14B**) is converted to coordinates (x, y) in the all-direction image **141** using formulas (3) and (4). As shown in Figure **15,** the radius r and the angle $\theta$ in the perspective projection image **143** are represented by

$$\alpha = \arctan(Tz/\sqrt{Tx^2 + Ty^2}) \cdots (5)$$

$$\beta = \arctan(((b^2 + c^2) \times \sin\alpha - 2 \times b \times c)/(b^2 - c^2) \times \cos\alpha) \cdots (6)$$

where the three-dimensional coordinates of the object **P** are (Tx, Ty, Tz), an angle of the object **P** viewed from a first focus **152** of a hyperboloidal mirror **150** with respect to a **Tx** axis is $\alpha$, an angle of the object **P** projected on the hyperboloidal mirror **150** viewed from the center of a camera lens **151** of the video camera **151** with respect to the Tx axis is $\beta$, and

a, b and c are numerical values determining the shape of the hyperboloidal mirror **150** and satisfying formulas (1) and (2). The radius r and the angle θ also satisfy

$$\theta = -\arctan(Ty/Tx) \quad \cdots \quad (7)$$

$$r = F \times \tan((\pi/2) - \beta) \quad \cdots \quad (8)$$

where F is the focal distance of the camera lens **151.**

A radius r and an angle θ are calculated in advance for a set of coordinates (Tx, Ty, Tz) corresponding to each pixel on the perspective projection plane **156** in accordance with formulas (7) and (8) to prepare a 8-coordinate table tbθ and a r-coordinate table tbr as a portion of the table **86.** In this example, the size of the perspective projection plane **156** is 120 x 120 pixels as described above, for example. Therefore, this size corresponds to the viewing angle obtained when assuming the video camera **73** is placed at the first focus **152** of the hyperboloidal mirror **150.**

Therefore, each pixel on the perspective projection plane **156** can be converted to polar coordinates (r, θ) on the all-direction image **141** only by referencing the table tbθ and the table tbr. Thereafter, the polar coordinates (r, 8) are converted to coordinates (x, y) on the the all-direction image **141** only by referencing the table tbx and the table tby.

A pan operation can be performed in the perspective projection image **143** by adding an offset to an angle 8 when producing the table tbθ, as in the panoramic image **142.** A tilt operation can also be performed in the perspective projection image **143** by preparing a specialized table tbtr of a radius r. The tilt table tbtr lists a radius obtained by formulas (6) and (8) with respect to an angle α obtained by a tilt angle. Therefore, a pan operation and a tilt operation of the perspective projection image **143** can be performed by image processing at high speed.

As described above, in this example, the processes in steps **110** to **114** and step **117** of Figure 11 are performed using functions included in an image processing library contained in an image processing board. The detection of a moving object is performed using only G data of RGB data. An all-direction image is converted to a panoramic image or a perspective projection image using a plurality of tables previously prepared. Therefore, a moving Image processing having a rate of 10 frames per second can be obtained in this example. In order to obtain moving image processing having a rate of 30 frames per second, for example, an image processing board having a processing rate three times that of the above-described image processing board is required. The processes in steps **115, 116, 118** and **119** may be performed by a CPU of a personal computer rather than an image processing board.

As described above, according to the present invention, an optical system including a hyperboloidal mirror and a stationary camera are used instead of a mechanical driving portion. Therefore, maintenance is substantially not required during long-time operation, and highly reliable and stable operation can be realized. Further, only one camera is required, resulting in an inexpensive moving object tracking apparatus. Furthermore, visual field information on the 360° environment can be captured simultaneously. Therefore, losing track of a moving object is unlikely, and it is also possible to track a moving object which moves around the camera.

An all-direction image obtained by using a hyperboloidal mirror in an optical system can be converted to a panoramic image so as to be easily viewed, or to a perspective projection image to obtain an image substantially without distortion. Therefore, recognition precision of a moving object can be improved. The moving object tracking apparatus of the present invention can be used in various applications, such as an indoor or outdoor surveillance apparatus, in a locomotive robot, and in a vehicle.

Detecting and tracking a moving object can be realized by the above-described simple algorithms. The modification of a viewing angle, such as pan or tilt, can be performed. Further, complicated circuitry for controlling the movements of a camera as in the conventional technology is not required. Therefore, the entire system can be made simple. A moving object tracking apparatus handling color moving images can also be made small.

According to the present invention, image information processing is carried out using a conversion table previously prepared depending on the resolution of a captured image, thereby speeding up image information processing. Further, color moving images can be processed at high speed by subjecting one color data of RGB data to image processing.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A moving object tracking apparatus for detecting and tracking one or more moving objects (33, 34) in an environment, comprising:

an optical system including a hyperboloidal mirror (10; 70) for capturing visual field information on a 360° environment;
a stationary camera (11; 73) for converting the captured visual field information to image information; and
an information processing section (14; 90) for processing the image information so as to detect the one or more moving objects based on the image information;
wherein the apparatus has a single camera, which is said stationary camera, and in that the information processing section is arranged to process the image information from said single, stationary camera, so as to track said one or more moving objects, wherein the information processing section provides a respective marker to the respective one or more moving objects, only it the size of the one or each moving objects is above a predetermined threshold.

2. A moving object tracking apparatus according to claim 1, wherein:

the image information includes all-direction image information; and
the information processing section converts at least a portion of the all-direction image information to panoramic image information.

3. A moving object tracking apparatus according to any preceding claim, wherein:

the image information includes all-direction image information; and
the information processing section converts at least a portion of the all-direction image information to perspective projection image information.

4. A moving object tracking apparatus according to any preceding claim, wherein the information processing section processes the image information using a previously prepared table (86).

5. A moving object tracking apparatus according to any preceding claim, wherein the information processing section processes the image information using only one kind of data out of RGB data in the image information.

6. A moving object tracking apparatus according to any preceding claim, wherein the information processing section detects the one or more moving objects based on a brightness difference between predetermined frame information and frame information previous to the predetermined frame information of the image information.

7. A method comprising the steps of: capturing, by means of a hyperboloidal mirror (10; 70), image information from a 360 degree field of view; processing said captured information to detect one or more objects in said field of view, and tracking said one or more objects, wherein both the object detection and tracking is performed, using a single stationary camera capturing said image information from the hyperboloidal mirror, by processing said captured information and each detected moving object is allocated a marker, if said moving object is of a size above a predetermined threshold.

## Patentansprüche

1. Vorrichtung zum Verfolgen eines sich bewegenden Objekts, um ein oder mehrere sich bewegende Objekte (33, 34) in einer Umgebung zu erfassen und zu verfolgen, mit:

einem optischen System, das einen Hyperboloidspiegel (10; 70) aufweist, um Gesichtsfeldinformationen in einer 360°-Umgebung einzufangen;
einer stationären Kamera (11; 73) zum Umsetzen der eingefangenen Gesichtsfeldinformationen in Bildinformationen; und
einem Informationsverarbeitungsabschnitt (14; 90) zum Verarbeiten der Bildinformationen, um so das eine oder die mehreren sich bewegenden Objekte anhand der Bildinformationen zu erfassen;
wobei die Vorrichtung eine einzige Kamera besitzt, die die stationäre Kamera ist, und der Informationsverarbeitungsabschnitt so beschaffen ist, dass er die Bildinformationen von der einzigen stationären Kamera verarbeitet, um so das eine oder die mehreren sich bewegenden Objekte zu verfolgen, wobei der Informationsverarbeitungsabschnitt einen jeweiligen Markierer für das entsprechende eine oder die entsprechenden mehreren sich bewegenden Objekte nur dann bereitstellt, wenn die Größe des einen oder der mehreren sich bewegenden Objekte oberhalb eines vorgegebenen Schwellenwerts liegt.

2. Vorrichtung zum Verfolgen eines sich bewegenden Objekts nach Anspruch 1, bei der:

die Bildinformationen Allrichtungs-Bildinformationen enthalten; und
der Informationsverarbeitungsabschnitt wenigstens einen Teil der Allrichtungs-Bildinformationen in Panorama-Bildinformationen umsetzt.

3. Vorrichtung zum Verfolgen eines sich bewegenden Objekts nach einem vorhergehenden Anspruch, bei der:

die Bildinformationen Allrichtungs-Bildinformationen enthalten; und
der Informationsverarbeitungsabschnitt wenigstens einen Teil der Allrichtungs-Bildinformationen in Bildinformationen einer perspektivischen Projektion umsetzt.

4. Vorrichtung zum Verfolgen eines sich bewegenden Objekts nach einem vorhergehenden Anspruch, bei der der Informationsverarbeitungsabschnitt die Bildinformationen unter Verwendung einer im Voraus erstellten Tabelle (86) verarbeitet.

5. Vorrichtung zum Verfolgen eines sich bewegenden Objekts nach einem vorhergehenden Anspruch, bei der der Informationsverarbeitungsabschnitt die Bildinformationen unter Verwendung lediglich eines Datentyps von RGB-Daten in den Bildinformationen verarbeitet.

6. Vorrichtung zum Verfolgen eines sich bewegenden Objekts nach einem vorhergehenden Anspruch, bei der der Informationsverarbeitungsabschnitt das eine oder die mehreren sich bewegenden Objekte anhand einer Helligkeitsdifferenz zwischen vorgegebenen Rahmeninformationen und Rahmeninformationen, die den vorgegebenen Rahmeninformationen der Bildinformationen vorhergehen, erfasst.

7. Verfahren, das die folgenden Schritte enthält: Einfangen von Bildinformationen aus einem 360°-Gesichtsfeld mittels eines Hyperboloidspiegels (10; 70); Verarbeiten der eingefangenen Informationen, um ein oder mehrere Objekte in dem Gesichtsfeld zu erfassen, und Verfolgen des einen oder der mehreren Objekte, wobei sowohl die Objekterfassung als auch die Objektverfolgung unter Verwendung einer einzigen stationären Kamera ausgeführt wird, die die Bildinformationen von dem Hyperboloidspiegel einfängt, indem die eingefangenen Informationen verarbeitet werden und jedem erfassten sich bewegenden Objekt ein Markierer zugewiesen wird, falls das sich bewegende Objekt eine Größe oberhalb eines vorgegebenen Schwellenwerts besitzt.

**Revendications**

1. Appareil de poursuite d'objet(s) en mouvement pour détecter et poursuivre un ou plusieurs objets (33, 34) en mouvement dans un environnement, comprenant :

un système optique comprenant un miroir hyperboloïde (10 ; 70) pour saisir des informations de champ de vision sur un environnement de 360° ;
une caméra fixe (11 ; 73) pour convertir les informations de champ de vision saisies en informations d'image ; et
une section de traitement d'informations (14 ; 90) pour traiter les informations d'image de manière à détecter le ou les objets en mouvement sur la base des informations d'image ;
dans lequel l'appareil comporte une seule caméra, laquelle est ladite caméra fixe, et en ce que la section de traitement d'informations est conçue pour traiter les informations d'image provenant de ladite seule caméra fixe, de manière à poursuivre ledit ou lesdits objets en mouvement, la section de traitement d'informations attribuant un marqueur respectif à l'objet ou aux objets en mouvement respectifs, uniquement si la taille du ou des objets en mouvement dépassent un seuil prédéterminé.

2. Appareil de poursuite d'objet(s) en mouvement selon la revendication 1, dans lequel :

**EP 1 182 465 B1**

les informations d'image comprennent des informations d'image omnidirectionnelles ; et
la section de traitement d'informations convertit au moins une partie des informations d'image omnidirectionnelles en informations d'image panoramiques.

3. Appareil de poursuite d'objet(s) en mouvement selon l'une quelconque des revendications précédentes, dans lequel :

les informations d'image comprennent des informations d'image omnidirectionnelles ; et
la section de traitement d'informations convertit au moins une partie des informations d'image omnidirectionnelles en informations d'image de projection en perspective.

4. Appareil de poursuite d'objet(s) en mouvement selon l'une quelconque des revendications précédentes, dans lequel la section de traitement d'informations traite les informations d'image à l'aide d'une table (86) préparée au préalable.

5. Appareil de poursuite d'objet(s) en mouvement selon l'une quelconque des revendications précédentes, dans lequel la section de traitement d'informations traite les informations d'image à l'aide d'un seul type de données parmi des données RVB dans les informations d'image.

6. Appareil de poursuite d'objet(s) en mouvement selon l'une quelconque des revendications précédentes, dans lequel la section de traitement d'informations détecte le ou les objets en mouvement sur la base d'une différence de brillance entre des informations de trame prédéterminées et des informations de trame antérieures aux informations de trame prédéterminées des informations d'image.

7. Procédé comprenant les étapes consistant à : saisir, à l'aide d'un miroir hyperboloïde (10 ; 70), des informations d'image provenant d'un champ de vision de 360°, traiter lesdites informations saisies afin de détecter un ou plusieurs objets dans ledit champ de vision, et poursuivre ledit ou lesdits objets, dans lequel la détection et la poursuite de l'objet sont toutes les deux réalisées à l'aide d'une seule caméra fixe saisissant lesdites informations d'image provenant du miroir hyperboloïde, en traitant lesdites informations saisies et en attribuant un marqueur à chaque objet en mouvement détecté si ledit objet en mouvement présente une taille dépassant un seuil prédéterminé.

## FIG. 1

Hyperboloidal
mirror 10

~1000

Information
processing section 14

Video camera 11

Computer system

13

Image processing
board

12

## FIG. 2

Display screen 20

All-direction
image 21

34

33

## FIG.3

Panoramic image 30

33　Maker 31

34　Maker 32

## FIG.4

Perspective projection image 40

33

## FIG.5A

Perspective projection image 50

33

## FIG.5B

Pan image 51

34

⇒

# FIG.6

Hyperboloidal mirror 60

First focus 62

Asymptotic line 65

a

c

b

33

0

Asymptotic line 66

34

c

Camera lens 61

Z

Y

X

Second focus 63

Image capturing plane 64

FIG.7

*FIG.8*

Video input → AD converter (80)

Image memory (81) — Table (86)

Control section (82)

Internal image bus 85

PCI bridge (83)

Image processing section (84)

PCI bus (output bus)

EP 1 182 465 B1

## FIG.9

All-direction
image 91

## FIG.10

Perspective projection image 100

All-direction image 91

Panoramic image 101

Marker 102

103

Omnidirectional camera

File    Image processing menu    Settings    Help

## FIG.11

```
                    ┌─────────────────┐
                    (      START       )
                    └─────────────────┘
                             │
              ┌──────────────────────────┐
              │    Frame  difference     ├──110
              └──────────────────────────┘
                             │
              ┌──────────────────────────┐
              │        Expansion         ├──111
              └──────────────────────────┘
                             │
              ┌──────────────────────────┐
              │    Binary  conversion    ├──112
              └──────────────────────────┘
                             │
              ┌──────────────────────────┐
              │        Labeling          ├──113
              └──────────────────────────┘
                             │
              ┌──────────────────────────┐
              │     Area  extraction     ├──114
              └──────────────────────────┘
                             │
                            ╱╲ ──115
                          ╱    ╲
                        ╱        ╲
              ╱  Is the area  ╲
            ╱ greater than or equal ╲──NO
              ╲   to a threshold?  ╱
                ╲              ╱
                  ╲          ╱
                    ╲      ╱
                      YES
                       │
              ┌──────────────────────────┐
              │      Area  sorting       ├──116
              └──────────────────────────┘
                             │
        ┌──────────────────────────────────────┐
        │ Extraction of barycentric coordinates ├──117
        └──────────────────────────────────────┘
                             │
              ┌──────────────────────────┐
              │      Identification      ├──118
              └──────────────────────────┘
                             │
          ┌──────────────────────────────┐
          │  Polar coordinate conversion ├──119
          └──────────────────────────────┘
                             │
              ┌──────────────────────────┐
              │    Panorama  conversion  ├──120
              └──────────────────────────┘
                             │
        ┌──────────────────────────────────────┐
        │  Perspective projection conversion   ├──121
        └──────────────────────────────────────┘
                             │
                    ┌─────────────────┐
                    (       END        )
                    └─────────────────┘
```

*FIG.12*   Display screen 20

X coordinate

All-direction
image 21

34'

34

33'

33

Y coordinate

*FIG. 13A*  Display screen 130

All-direction image 131

Coordinates
of object P (x,y)

r

θ

Coordinates
of center (Cx,Cy)

⇒

*FIG. 13B*

Panoramic image 132

Coordinates
of object P (r,θ)

r

θ

## FIG. 14A

Display screen 140

All-direction image 141

Coordinates of object P(x,y)

A

D r

B

θ

C

Coordinates 0 of center (Cx,Cy)

⇓

## FIG. 14B

Panoramic image 142

Perspective projection image 143

Coordinates of object P (r,θ)

r

θ

# FIG.15

Hyperboloidal mirror 150

Tz axis

First focus 152

Asymptotic line 155

$\alpha$

Spatial coordinates of object P (Tx,Ty,Tz)

Perspective projection plane 156

Tx axis

Ty axis

$\beta$ Camera lens 151

Second focus 153

Mapped point of object P

Image capturing plane 154